# EUROPÄISCHE PATENTSCHRIFT

(11) **EP 2 433 886 B1**
(45) Veröffentlichungstag und Bekanntmachung des Hinweises auf die Patenterteilung: **23.01.2013**
(21) Anmeldenummer: 11177238.0
(22) Anmeldetag: 11.08.2011
(51) Int. Cl.: B65G 49/06, B65G 1/04

(54) **Verfahren zum Betreiben eines Zwischenspeichers für Restglastafeln sowie Zwischenspeichervorrichtung für Restglastafeln**
Method for operating a temporary storage device for residual glass panels and temporary storage device for residual glass panels
Procédé de fonctionnement d'un accumulateur temporaire pour piles de verre résiduel et dispositif d'accumulation temporaire pour piles de verre résiduel

(30) Priorität: 23.09.2010 DE 102010046330
(43) Veröffentlichungstag der Anmeldung: 28.03.2012
(73) Patentinhaber: HEGLA GmbH & Co. KG, 37688 Beverungen (DE)
(72) Erfinder: Vollbracht, Manfred, 37688 Beverungen (DE); Hötger, Bernhard, 37697 Lauenförde (DE); Rotermund, Christian, 37671 Höxter (DE)
(74) Vertreter: Solf, Alexander

(56) Entgegenhaltungen:
- EP-B1- 1 284 229
- DE-U1-202008 011 687

## Beschreibung

Die Erfindung betrifft ein Verfahren zum Betreiben eines Zwischenspeichers für Restglastafeln, in dem Restglastafeln horizontal gelagert werden, die z. B. in einer Schneidvorrichtung zum Schneiden von Glastafeln anfallen. Die Erfindung betrifft zudem eine Zwischenspeichervorrichtung zum horizontalen Lagern von Restglastafeln, die verfahrenstechnisch einer mindestens eine Schneidvorrichtung zum Ritzen von Glastafeln und mindestens eine Brecheinrichtung zum Brechen der geritzten Glastafeln aufweisenden Schneidlinie für Glastafeln in Verbindung steht und die zur Entnahme von Restglastafeln aus der Schneidvorrichtung und zu deren Verbringung in die Zwischenspeichervorrichtung und umgekehrt dient und die einen Zwischenspeicher mit kubischem Innenraum und horizontalen Speicherfächern im Innenraum und eine Beschickungseinrichtung für den Zwischenspeicher aufweist.

Ein Verfahren und eine gattungsgemäße Vorrichtung dieser Art sind aus der EP 1 284 229 B1 bekannt. Bei dem bekannten Zwischenspeicherverfahren werden Restglastafeln in eine Zwischenspeichervorrichtung gebracht und dort horizontal übereinander in Schubfächern gelagert, wobei ihre Größe, Anzahl und ihr Lagerort rechnergestützt erfasst werden und die im Zwischenspeicher gelagerten Restglastafeln bedarfsweise bei einer folgenden Schnittmusterberechnung eingerechnet, ausgewählt und einer Schneidvorrichtung zugeführt werden. Das Ein- und Auslagern der Restglastafeln erfolgt mit einer dem Zwischenspeicher zugeordneten Beschickungseinrichtung, die eine horizontale, vertikal verfahrbare, mit einer Greifeinrichtung ausgerüstete Auflagetischeinrichtung aufweist. Die Beschickungseinrichtung kann Restglastafeln von einer Schneidvorrichtung einer Schneidlinie für Glastafeln zum Zwischenspeicher und zurück transportieren.

Das bekannte Zwischenspeicherverfahren und die bekannte Zwischenspeichervorrichtung haben sich bewährt.

Aufgabe der Erfindung ist, die Speicherkapazität einer derartigen Zwischenspeichervorrichtung zu erhöhen, ohne den Raumbedarf für den Zwischenspeicher zu erweitern und ein Verfahren zum Betreiben eines Zwischenspeichers zu schaffen, mit dem diese Erhöhung der Speicherkapazität mit einfachen Verfahrensschritten und einfachen Mitteln zu erreichen ist.

Diese Aufgabe wird durch die Merkmale des Anspruchs 1 und 7 gelöst. Vorteilhafte Weiterbildungen der Erfindung werden in den von diesen Ansprüchen abhängigen Unteransprüchen gekennzeichnet.

Die Erfindung befasst sich mit dem Zwischenspeichern von Restglastafeln, die Reststücke von auf dem Markt erhältlichen Rohglastafeln sind. Die Rohglastafeln haben grundsätzlich folgende Abmessungen:
Länge: 6000 mm
Breite: 3210 mm

Restglastafeln, die erfindungsgemäß zwischenzuspeichern sind, weisen eine geringere Länge als die Rohglastafeln, jedoch die gleiche Breite auf. Die Erfindung gibt eine Möglichkeit an, diese gleich breiten Restglastafeln zwischenzuspeichern. Dabei kann aber auch eine unbeschnittene Rohglastafel zwischengespeichert werden, weil die Abmessungen des Zwischenspeichers vorzugsweise darauf abgestellt sind. Unter bestimmten Voraussetzungen können auch Restglasscheiben, die eine geringere Breite aufweisen, in den Zwischenspeicher mit eingelagert und wieder entnommen werden, wie weiter unten erläutert wird.

Die bekannte Zwischenspeichervorrichtung ist so eingerichtet, dass in ein Speicherfach eine Rohglastafel oder eine einzelne Restglastafel einschiebbar und herausziehbar ist. Die vorliegende Erfindung sieht demgegenüber vor, in ein Speicherfach mindestens zwei Restglastafeln oder eine Restglastafel und eine Restglasscheibe in Transportrichtung hintereinander einlagern und herausziehen zu können, ohne dass die vertikale Speicherfachanzahl oder die horizontale Speicherfacherstreckung vergrößert werden muss.

Die Erfindung nutzt den belegbaren Raum eines Speicherfachs, das z. B. der Größe einer Rohglastafel entspricht, optimal aus, indem z. B. drei Restglastafeln mit z. B. 1800 mm Restlänge in einem Speicherfach hintereinander liegend speicherbar und aus dem Speicherfach entnehmbar sind. Dabei kann die an der Entnahmestelle des Speicherfachs lagernde Glastafel eine geringere Breite und Länge aufweisen, weil sie nur eingeschoben oder herausgezogen zu werden braucht und nicht tiefer in das Speicherfach befördert zu werden braucht.

Sofern Rohglastafeln mit anderen Breiten zu verarbeiten sind, sind die Abmessungen der Zwischenspeichervorrichtung konstruktiv darauf abzustellen. Im europäischen Raum weisen derzeit Rohglastafeln die oben angegebenen Abmessungen auf.

Anhand der Zeichnung wird die Erfindung im Folgenden beispielhaft näher erläutert. Es zeigen:
- Fig. 1: perspektivisch einen erfindungsgemäßen Zwischenspeicher;
- Fig. 2: eine Frontansicht des erfindungsgemäßen Zwischenspeichers nach Fig. 1;
- Fig.3: eine perspektivische Draufsicht auf eine am Zwischenspeicher angeordnete hubschlittenartige Transportvorrichtung mit eingefahrener Stellung von Förderbändern;
- Fig. 4: eine perspektivische Draufsicht auf die Transportvorrichtung gemäß Fig. 3 mit ausgefahrener Stellung der Förderbänder;
- Fig. 5: schematisch eine Seitenansicht einer erfindungsgemäßen Zwischenspeichervorrichtung über einer Rohglastafelschneidlinie;
- Fig. 6: eine perspektivische Ansicht einer erfindungsgemäßen Ausführungsform der Kombination aus Zwischenspeicher und einer weiteren zweckmäßigen Ausführungsform einer Beschickungseinrichtung;

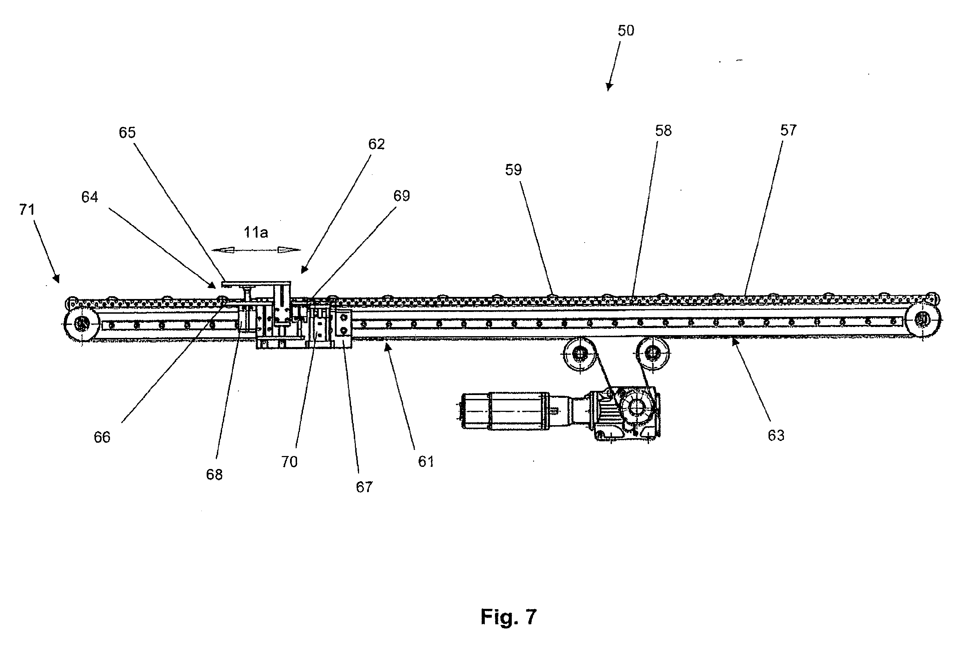

- Fig. 7: schematisch eine Seitenansicht einer erfindungsgemäßen Auflagetischeinrichtung;
- Fig. 8a) bis h): schematisch einen erfindungsgemäßen Verfahrensablauf des Betreibens eines Zwischenspeichers.

Eine erfindungsgemäße Zwischenspeichervorrichtung 1 weist im Wesentlichen einen Zwischenspeicher 2 und eine Beschickungseinrichtung 3 für den Zwischenspeicher 2 auf.

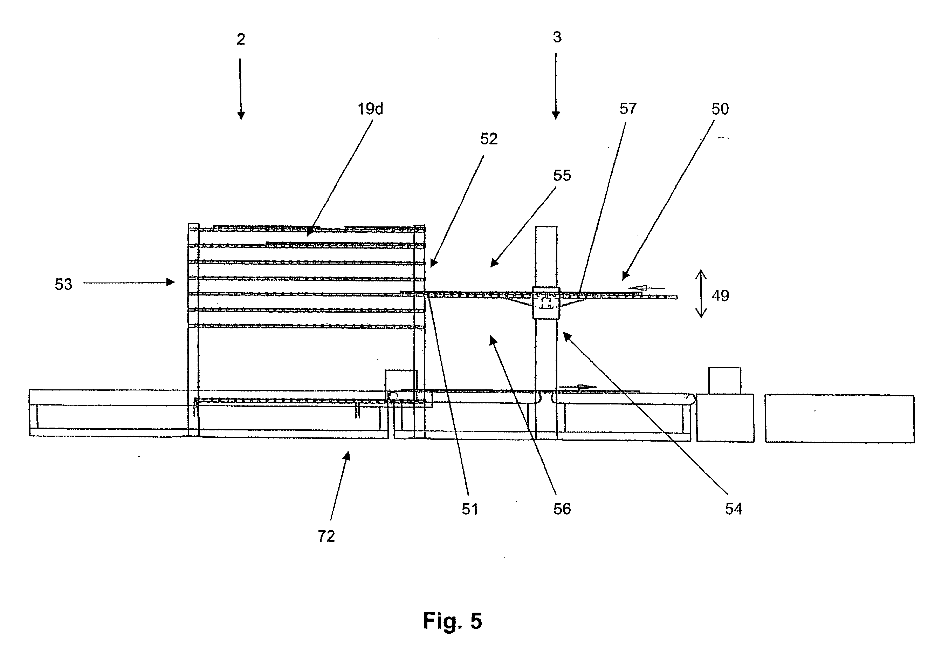

Der Zwischenspeicher 2 ist zweckmäßigerweise über einer Schneidlinie 72 angeordnet (Fig. 5), die zum Beispiel zumindest über eine Schneidvorrichtung zum Ritzen von Rohglastafeln und wenigstens eine Brechvorrichtung zum Aufteilen der Rohglastafeln in einzelne Glasscheiben verfügt. In der Brechvorrichtung fallen Restglastafeln 19 an, die mit der erfindungsgemäßen Zwischenspeichervorrichtung 1 zwischengespeichert werden können. Für den Transport der Restglastafeln 19 aus der Brechvorrichtung und/oder Schneidvorrichtung zur erfindungsgemäßen Beschickungseinrichtung 3 sind entsprechende Transportmittel vorgesehen, die zum Beispiel in der EP 1 284 229 B1 beschrieben werden.

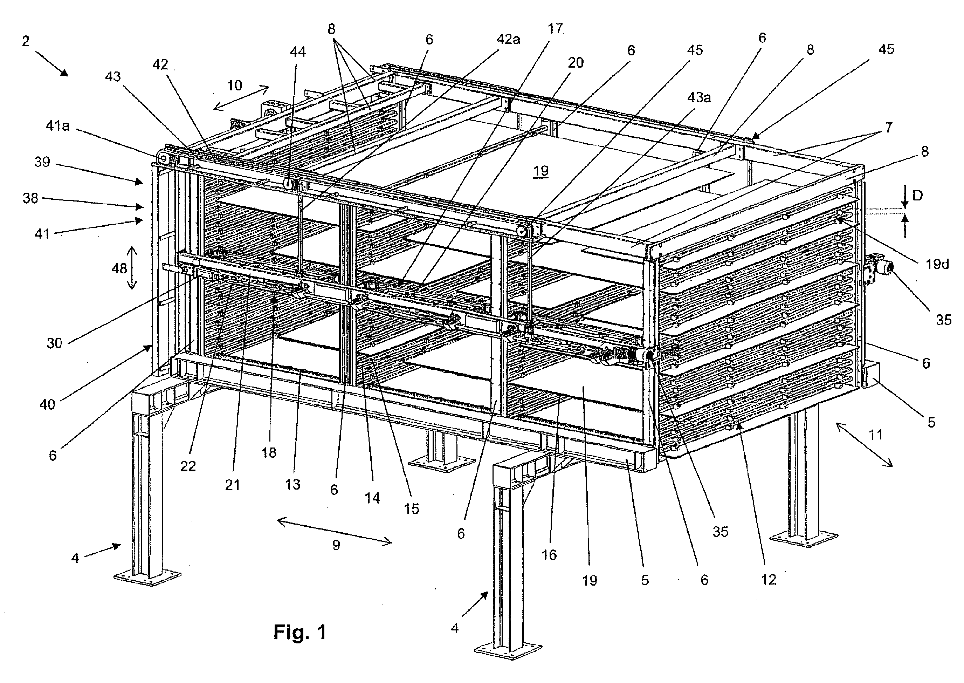

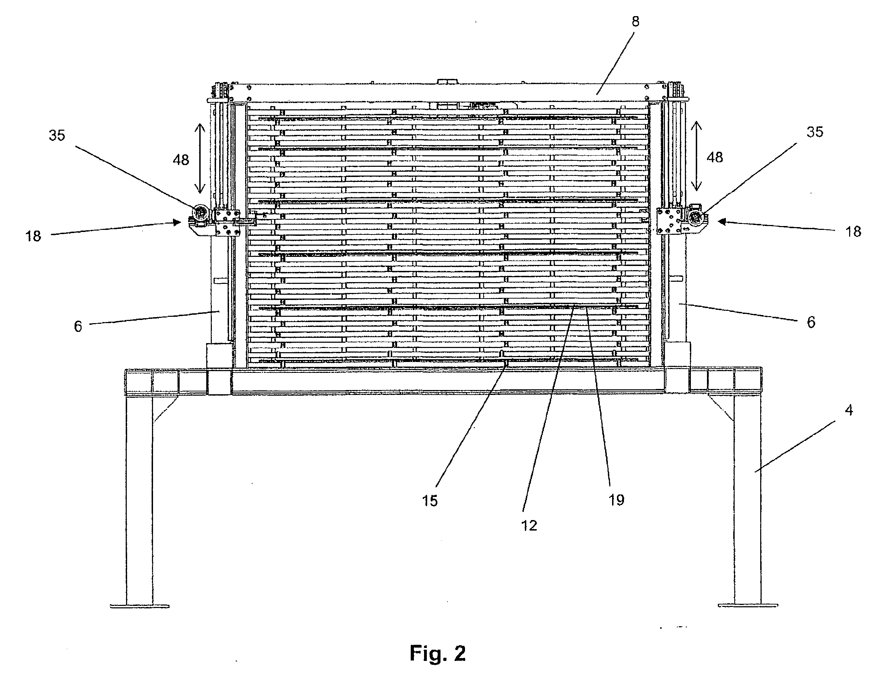

Die in den Fig. 1 und 2 beispielhaft abgebildete Ausführungsform eines Zwischenspeichers 2 ruht zum Beispiel auf fundament- oder maschinenbefestigten, raumformmäßig U-förmig ausgestalteten Querträgern 4 und wird zum Beispiel aus einem einen kubischen Innenraum einschließenden Raumfachwerk gebildet, zum Beispiel aus horizontalen unteren Basislängsträgern 5, die auf den Querträgern 4 lagern, vertikalen Tragsäulen 6 und horizontalen oberen Längsstreben 7 und oberen Querstreben 8. Die Richtung "längs" bezieht sich auf die Längserstreckung 9 bzw. die Einschub- und Ausziehrichtung 11 für die Restglastafeln 19 und die Richtung "quer" auf die Quererstreckung 10 des Zwischenspeichers 2.

In dem Zwischenspeicher 2 sind horizontale Speicherfächer 12 vertikal übereinander im Innenraum des Raumfachwerks angeordnet. Die Speicherfächer 12 weisen in Querrichtung nebeneinander angeordnete Längsstäbe 13 auf, von denen in Fig. 1 nur einer der untersten Längsstäbe des untersten Speicherfachs 12 dargestellt ist, um die Übersichtlichkeit der Abbildung nicht zu stören. Die Längsstäbe 13 stehen mit Querachsen 14 in Verbindung, die Auflagerröllchen 15 frei drehbar lagern. Der vertikale Abstand des Freiraums der Speicherfächer 12 ist zweckmäßigerweise nur geringfügig größer als die Dicke einer einzulagernden Restglastafel 19. Insoweit kann der Zwischenspeicher 2 dem aus der EP 1 284 229 B1 bekannten Stand der Technik entsprechen.

Der Aufbau des Zwischenspeichers 2 kann aber konstruktiv auch mit anderen Mitteln aufgebaut sein, wobei für die Zwecke der Erfindung aber wesentlich ist, dass die Längskanten 16 der eingelagerten Restglastafeln 19 von den vertikalen Längsseiten des Zwischenspeichers 2 frei zugänglich sind, d. h., dass ein Längskantenbereich einer Restglastafel 19 den ersten seitlichen Längsstab 13 seitlich nach außen überkragt. Durch diese überkragende Anordnung weisen die frei zugänglichen Längskantenbereiche zweier übereinander angeordneter Restglastafeln 19 einen freien Zwischenraum 19d mit einem Abstand D auf.

Es liegt im Rahmen der Erfindung, die Tragsäulen 6 zwischen den vertikalen eckseitigen Tragsäulen wegzulassen, so dass die Längsseitenbereiche des Zwischenspeichers 2 vollständig frei zugänglich sind.

Nach der Erfindung ist an jeder Längsseite des Zwischenspeichers 2 je eine vertikal verfahrbare, schlittenartig geführte Transportvorrichtung 18 angeordnet, die mindestens ein Förderelement 17 für ein horizontales Verschieben von in einem Speicherfach des Zwischenspeichers 2 gelagerten oder einzulagernden Restglastafeln 19 in Richtung Entnahmestelle des Speicherfachs oder tiefer in das Speicherfach hinein aufweist. Das Förderelement 17 ist an der Transportvorrichtung 18 horizontal in Richtung Innenraum des Zwischenspeichers 2 in Pfeilrichtung 46 vor und zurück derart versetzbar angeordnet, dass es einen Längskantenbereich einer Restglastafel 19 untergreifen kann, wenn das Förderelement 17 in Richtung Innenraum versetzt ist, und vom Längskantenbereich entfernt positioniert ist, wenn das Förderelement 17 zurückgezogen ist.

Das Förderelement 17 besteht zweckmäßigerweise aus mindestens einem endlosen, mit Richtungswechsel antreibbaren Förderband 20, das sich parallel zu den Längskanten 16 der eingelagerten Restglastafeln 19 horizontal erstreckt und dessen Abstand zwischen dem oberen Trum und dem unteren Trum des Förderbandes 20 geringer ist als der vertikale Abstand D zwischen zwei Längskantenbereichen zweier unmittelbar übereinander in jeweils einem Speicherfach 12 eingelagerter Restglastafeln 19.

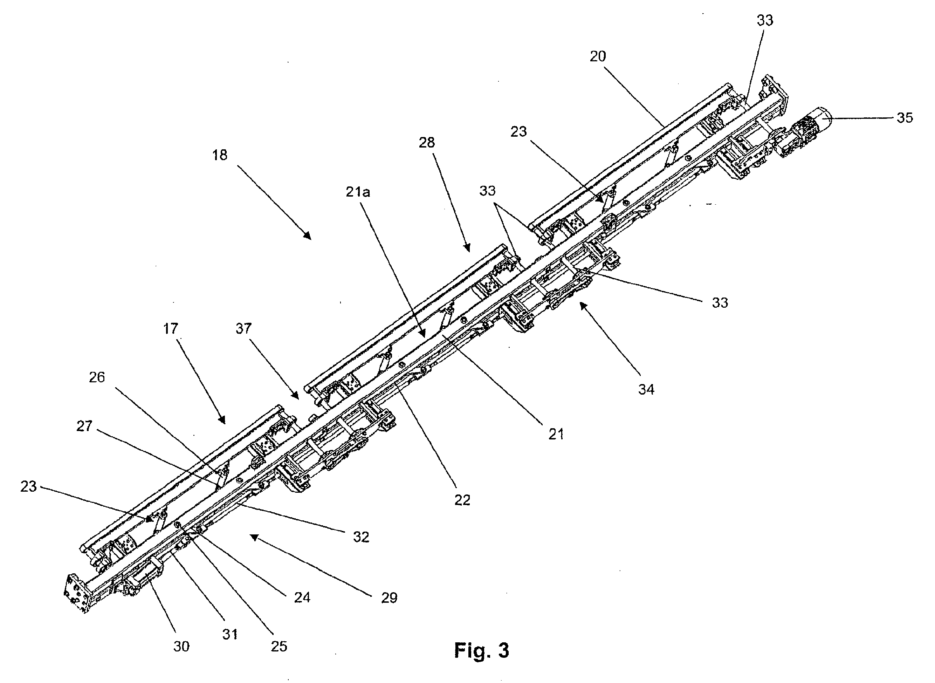

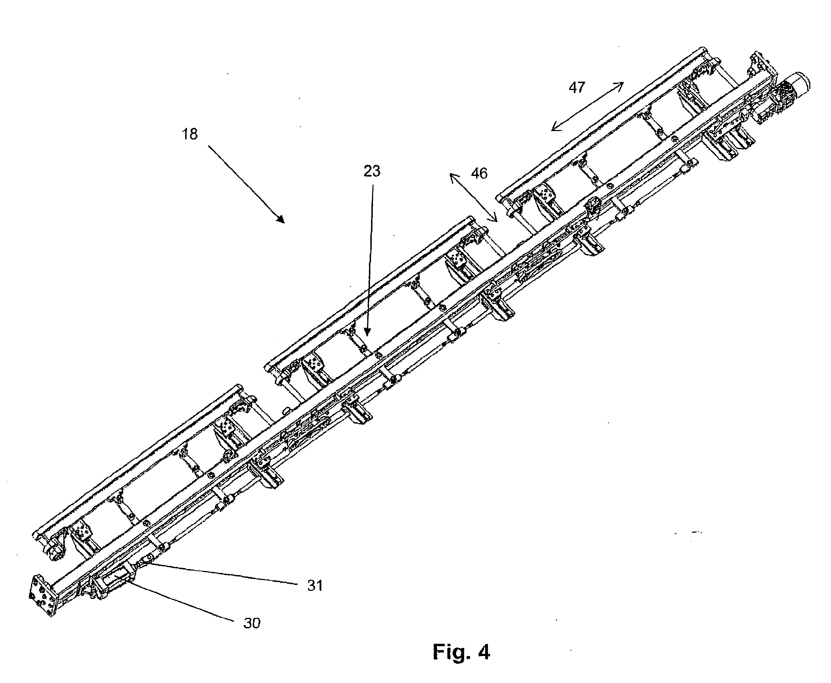

Eine zweckmäßige Ausführungsform der Transportvorrichtung 18 zeigen die Fig. 3 und 4. Zwischen zwei als Trägerelement 21 a dienenden, vertikal auf Abstand angeordneten horizontal liegenden Tragbalken 21, 22 sitzen sechs sich quer zur Längserstreckung der Tragbalken 21, 22 und horizontal erstreckende Kniehebel 23. Die Anzahl der Kniehebel 23 kann geringer oder aber auch größer sein. Ein erster Hebelarm 24 eines Kniehebels 23 ist in seinem Längsmittenbereich zwischen den Tragbalken 21, 22 um eine vertikale Achse 25 drehbar gelagert. Der zweite Hebelarm 26 des Kniehebels 23 erstreckt sich vom Kniehebelgelenk 27 zu einer Förderbandeinrichtung 28, die bei dieser Ausführungsform der Erfindung als zweckmäßiges Förderelement 17 fungiert. An der Förderbandeinrichtung 28 ist das freie Ende des zweiten Hebelarms 26 gelenkig befestigt. Das freie Ende des ersten Hebelarms 24 sitzt gelenkig an einer Betätigungseinrichtung 29, mit der alle Kniehebel 23 gleichzeitig und gleichsinnig streckbar und knickbar sind. Die Betätigungseinrichtung 29 weist zum Beispiel eine pneumatisch betriebene Kolbenzylinderanordnung 30 auf, die an den Tragbalken 21, 22 abgestützt befestigt ist und deren Kolbenstange 31 über Verbindungsgestänge 32 die Kniehebel 23 untereinander verbindet und betätigen kann.

Die Transportvorrichtung 18 verfügt im dargestellten Beispiel über drei Förderbandeinrichtungen 28 und damit über drei horizontal und endlos geführte Transportbänder 20, die an den Tragbalken 21, 22 gelagert sind. Eine Förderbandeinrichtung 28 weist quer zu den Tragbalken 21, 22 und zwischen letzteren erstreckende Wellen 33 auf, die zwischen den Tragbalken 21, 22 gleitbar gelagert sind und einendig an einer Drehachse des Transportbandes 20 gelagert sind und anderendig die Tragbalken 21, 22 durchgreifend mit einer an den Tragbalken 21, 22 in Doppelpfeilrichtung 46 wie die Förderbandeinrichtungen 28 gleitbar sitzenden Riemenmitnahmeeinrichtung 34 in Verbindung stehen, die wiederum mit der Welle 33 der benachbarten Förderbandeinrichtung 28 in Verbindung steht. Mit diesen Riemen aufweisenden Mitnahmeeinrichtungen 34 wird der Antrieb von einem Transportband 20 auf das benachbarte Transportband 20 übertragen.

Die abgebildete Transportvorrichtung 18 weist drei in Längsrichtung jeweils mit einer Lücke 37 auf Abstand angeordnete Förderbandeinrichtungen 28 auf, die antriebsmäßig untereinander über zwei Riemenmitnahmeeinrichtungen 34 verbunden sind, wobei der Antrieb über einen an den Tragbalken 21, 22 befestigten Antriebsmotor 35 erfolgt, der eine Welle 33 einer Förderbandeinrichtung 28 antreibt.

Die Tragbalken 21, 22 sitzen mit vertikalen Gleitführungen (nicht dargestellt) vertikal gleitbar am Zwischenspeicher 2, z. B. an den Tragsäulen 6 jeweils an einer Längsseite des Zwischenspeichers 2, wobei die Lücken 37 zwischen zwei Förderbandeinrichtungen 28 von je einer Tragsäule 6 durchgriffen werden. Sofern keine Tragsäulen 6 zwischen den Ecksäulen des Zwischenspeichers vorhanden sind, kann eine ungeteilte Förderbandeinrichtung 28 verwendet werden und die Riemenmitnahmeeinrichtungen 34 können entfallen.

Anstelle der Kniehebeleinrichtung, die die Förderbandeinrichtungen 28 versetzt, kann auch eine andersartige gleichwirkende Verschiebeeinrichtung, z. B. eine Kolbenzylinderanordnung, verwendet werden, die eine geradlinige horizontale Verschiebung der Förderbandeinrichtungen 28 bewerkstelligen kann.

Es liegt im Rahmen der Erfindung, anstelle von Transportbandeinrichtungen 28 Greifeinrichtungen mit z. B. Greifern oder Saugern ausgerüstet zu verwenden.

Nach der Erfindung können die beiden längsseitig angeordneten Transportvorrichtungen 18 synchron vertikal auf und ab verfahren werden. Hierzu dient zweckmäßigerweise eine Zugeinrichtung 38, z. B. eine Zugketten- oder Zugband- oder Zugseileinrichtung (Fig. 1), die mindestens ein Zugmittel 41, z. B. in Form einer Zugkette 39 aufweist, die mit mindestens einer antreibbaren Auf-und Abwickelwinde 40 in Verbindung steht, derart, dass die Zugmittel 41 verkürzt oder verlängert bzw. ausgefahren oder eingefahren werden können. Im dargestellten Beispiel sind für jede Transportvorrichtung 18 jeweils zwei Zugketten oder Zugseile oder Zugbänder 39 vorgesehen, die von der Winde 40 kommend zunächst vertikal nach oben gehen und über eine Umlenkrolle 41 a umgelenkt werden zu einem horizontalen Strang 42, 43. Der Strang 42 ist kürzer und läuft über eine Umlenkrolle 44 mit einem vertikalen Strang 42a zur Transportvorrichtung 18, an der der Strang 42a befestigt ist. Der horizontale längere Strang 43 geht über eine Umlenkrolle 45 in einen vertikal nach unten laufenden Strang 43a über, der ebenfalls an der Transportvorrichtung 18 befestigt ist.

Die Rollen 44 bzw. 45 an der einen Längsseite des Zwischenspeichers 2 stehen z. B. über Achsen mit den Rollen 44 bzw. 45 der anderen Längsseite des Zwischenspeichers 2 miteinander in Verbindung, so dass ein Gleichlauf der Zugmittel 41 gewährleistet ist. Andere Mittel, die einen Gleichlauf der Zugmittel 41 gewährleisten, sind z. B. synchron geschaltete, z. B. beidseits des Zwischenspeichers 2 angeordnete Winden 40.

Wesentlich ist, dass die Transportmittel 18 beidseits des Zwischenspeichers 2 synchron auf- und abfahrbar sind, wozu auch andere Antriebsmittel einsetzbar sind, z. B. gleichlaufende Motoren oder gleichlaufende Kolbenzylinderanordnungen, die direkt oder indirekt mit einem Transportmittel 18 oder beiden Transportmitteln 18 in Wirkverbindung stehen.

Fig. 4 zeigt die Transportvorrichtung 18 mit gestreckten Kniehebeln 23, die sich durch Einfahren der Kolbenstange 31 in die Kolbenzylinderanordnung 30 gestreckt haben. Durch entsprechende Betätigung der Kolbenzylinderanordnung 30 können die Förderbänder 20 in Doppelpfeilrichtung 46 in Richtung eines Speicherfaches vor- und zurückversetzt werden. Mit dem Antriebsmotor 35 können die Förderbänder 20 in Doppelpfeilrichtung 47 horizontal bewegt werden. Dafür ist zweckmäßigerweise an jeder der beiden gleich angetriebenen Transportvorrichtungen 18 ein Antriebsmotor 35 vorgesehen, wobei die Antriebsmotoren 35 gleichlaufend geschaltet sind.

Mit der Winde 40 oder, sofern beidseits je eine Winde 40 angeordnet ist, mit beiden Winden 40 können die Zugmittel 41 und damit die Transportvorrichtungen 18 in Doppelpfeilrichtung 48 vertikal auf und ab bewegt werden (Fig. 1).

Der Zwischenspeicher 2 ist kombiniert mit mindestens einer Beschickungseinrichtung 3, die in Einschub- und Ausziehrichtung 11 den Zwischenspeicher 2 frontal vor- und/oder rückwärtig nachgeordnet angeordnet ist. Der Zwischenspeicher 2 befindet sich zweckmäßigerweise oberhalb einer Schneidlinie 72 für Rohglastafeln. Die Beschickungseinrichtung 3 weist eine horizontale Auflagetischeinrichtung 50 zur Aufnahme und zum horizontalen Transportieren von Restglastafeln 19 auf, wobei die Vorderkante 51 der Auflagetischeinrichtung 50 eng benachbart zur Vorderfrontebene 52 bzw. Rückfrontebene 53 des Zwischenspeichers 2 angeordnet ist.

Die Auflagetischeinrichtung 50 steht mit einer Hubeinrichtung 54 in Verbindung, die die Auflagetischeinrichtung 50 vertikal in Doppelpfeilrichtung 49 hoch und runter fahren kann (Fig. 5). Zweckmäßigerweise ist die Auflagetischeinrichtung 50 brettartig und relativ dünn ausgebildet, so dass oberhalb und unterhalb der Auflagetischeinrichtung 50 ausreichend Verfahrraum 55/56 zum Erreichen unterschiedlicher Niveaus des Zwischenspeichers 2 verbleibt. Die Dicke der Auflagetischeinrichtung 50 beträgt z. B. 10 bis 25, insbesondere 15 bis 20 cm.

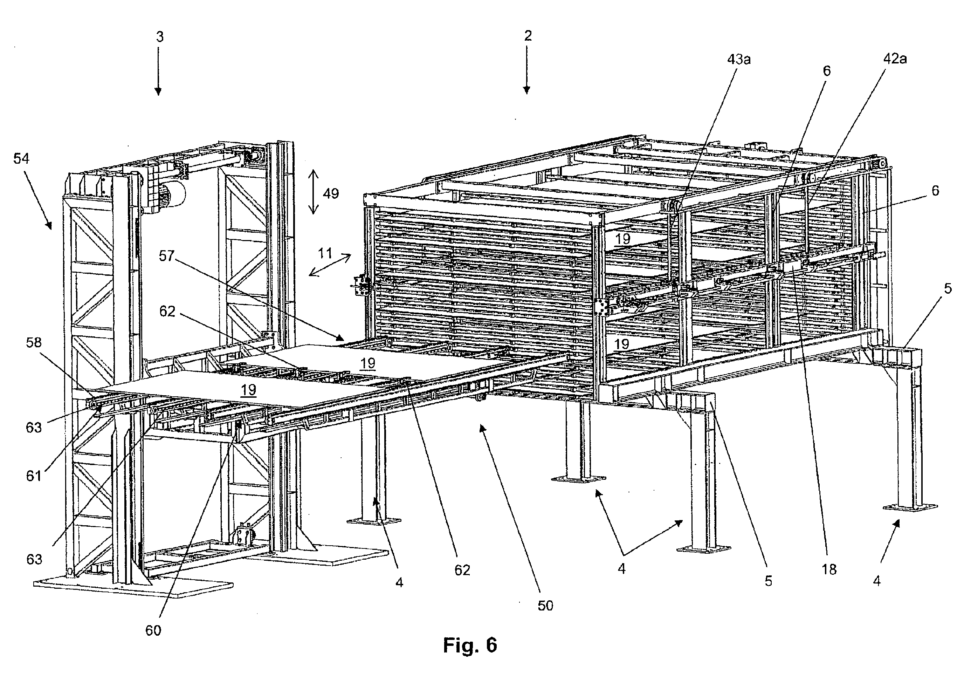

Zweckmäßigerweise wird der horizontale Oberflächenbereich 57 der Auflagetischeinrichtung 50, der zweckmäßigerweise die Abmessungen einer Rohglastafel hat, mit z. B. frei drehbaren Röllchen 59 ausgerüstet. Die Röllchen 59 bilden Röllchenbahnen 58, die in der Auflagetischeinrichtung 50 in an sich bekannter Weise gelagert sind und deren Achsen horizontal und senkrecht zur Transportrichtung von Restglasscheiben ausgerichtet sind (Fig. 6). Röllchen 59 der Röllchenbahnen 58 können auch mit an sich bekannten Antriebsmitteln angetrieben sein. Die Röllchenbahnen 58 sind auf seitlichem Abstand voneinander jeweils einen Spalt 60 bildend angeordnet. Anstelle von Röllchenbahnen 58 können auch frei verschiebbare oder angetriebene Riemchenbahnen oder Förderbandbahnen oder dergleichen vorgesehen sein.

Die Auflagetischeinrichtung 50 verfügt zudem über mindestens eine Greifeinrichtung 61, die zweckmäßigerweise einen klemmenden Greifer 62 aufweist. Der Greifer 62 sitzt an einem horizontal endlos geführten Seil-, Ketten- oder Bandantrieb 63, der sich vorzugsweise über die gesamte Länge der Auflagetischeinrichtung 50 in einem Spalt 60 erstreckt, so dass der Greifer 62 in Doppelpfeilrichtung 11 a vor- und zurück verfahrbar ist.

Der Greifer 62 weist ein in Richtung Zwischenspeicher 2 offenes Greifmaul 64 auf, das von einer oberen Greiferplatte 65 und einer unteren Greiferplatte 66 gebildet wird. Die Greiferplatten 65, 66 sind unabhängig voneinander auf und ab bewegbar angetrieben und sitzen an einem Montagebauteil 67, z. B. einer vertikalen Montageplatte, wobei das Montagebauteil 67 mit dem Bandantrieb 63 in fester Mitnahmeverbindung steht.

Die obere Greiferplatte 65 ist mit einer an der Montageplatte 67 sitzenden Kolbenzylindereinheit 68 verbunden, die die Greiferplatte 65 hoch und runter versetzen kann. Die untere Greiferplatte 66 steht mit einer Kolbenzylindereinheit 69 in Verbindung, die sich ebenfalls an der Montageplatte 67 abstützt und die untere Greiferplatte 66 hoch und runter versetzen kann. Zudem ist eine dritte Kolbenzylindereinheit 70 an der Montageplatte 67 angeordnet, die die Gesamtheit des Greifers 62 mit oberer und unterer Greiferplatte 65 und 66 auf und ab versetzen kann. Gleitführungen an der Montageplatte 67 gewährleisten eine sichere Führung der Greiferplatten 65, 66.

Mit dieser erfindungsgemäßen Anordnung der Greifereinrichtung 61 kann der Greifer 62 über und unter das Niveau des horizontalen Oberflächenbereichs 57 bzw. unter das Niveau von auf dem Oberflächenbereich 57 lagernden Restglasplatten 19 der Auflagetischeinrichtung 50 versetzt werden und die Greiferplatten 65, 66 unabhängig davon gegeneinander oder auseinander gefahren werden. Dabei ist die Greifereinrichtung 61 derart ausgebildet, dass das Greifmaul 64 über die Vorderkante 71 der Auflagetischeinrichtung 50 hinaus ragen kann, wenn der Greifer sich in vorderster Stellung zum Zwischenspeicher 2 befindet derart, dass eine Restglastafel 19 in ihrem Vorderkantenbereich erfasst und auf die Auflagetischeinrichtung 50 gezogen oder von der Auflagetischeinrichtung 50 in ein Zwischenspeicherfach 12 des Zwischenspeichers 2 geschoben werden kann.

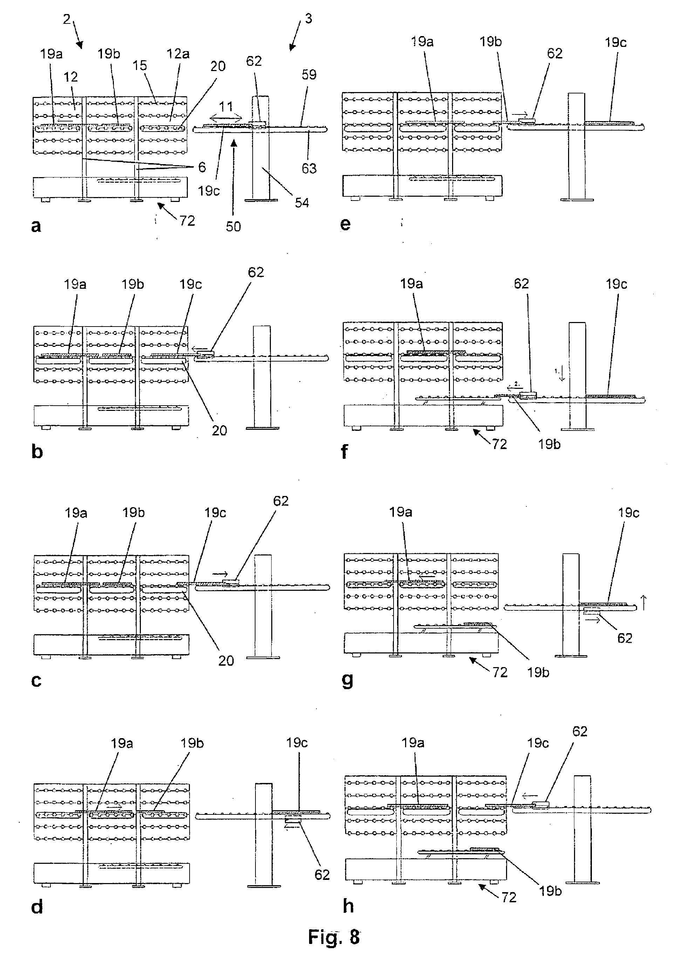

Da der Greifer 62 unter das Niveau von aufgelagerten Restglastafeln 19 abtauchen kann, kann er unterhalb von auf dem Oberflächenbereich 57 liegenden Restglastafeln 19 in Doppelpfeilrichtung 11a verfahren werden. Der Sinn und Zweck dieser Bewegungsmöglichkeit des Greifers 62 wird weiter unten anhand der Fig. 8a bis 8h beschrieben.

Mit der erfindungsgemäßen Zwischenspeichervorrichtung 1 und dem erfindungsgemäßen Verfahren zum Betreiben eines Zwischenspeichers für Restglastafeln 19 gelingt es mit einfachen Mitteln, die Speicherkapazität erheblich zu steigern, indem ein Förderelement 17 für das gleichzeitige horizontale Transportieren von mehreren in einem Zwischenspeicherfach 12 gelagerten Restglastafeln 19 dem Zwischenspeicher 2 zugeordnet ist, das ein Zwischenspeicherfach 12 anfahren und dann tätig werden kann, und indem die Beschickungseinrichtung 3 mit einer Greifeinrichtung 61 ausgerüstet ist, deren Greifelemente sowohl unter auf der Auflagetischeinrichtung 50 der Beschickungseinrichtung 3 liegenden Restglastafeln 19 abgetaucht verfahrbar sind als auch auf der Auflagetischeinrichtung 50 liegende Restglastafeln 19 erfassen und horizontal transportieren können.

Eine mögliche erfindungsgemäße Verfahrensweise des Händelns zwischengespeicherter Restglastafeln 19 wird schematisch in Fig. 8a) bis h) dargestellt. Zum Beispiel übernimmt die Auflagetischeinrichtung 50 der Beschickungseinrichtung 3 mit Greifern 62 aus der Schneidlinie 72 eine Restglastafel 19c, die auf die Auflagetischeinrichtung 50 mit den Greifern 62 gezogen wird. Die Auflageeinrichtung 50 wird mit der Hubeinrichtung 54 der Beschickungseinrichtung 3 vor ein Zwischenspeicherfach 12a des Zwischenspeichers 2 nach oben gefahren (Fig. 8a).

Die Greifer 62 schieben die Restglastafel 19c über frei drehbare Röllchen 59 der Röllchenbahnen 58 vor bereits im Speicherfach 12a lagernde Restglastafeln 19a, 19b in das Speicherfach 12a, in welchem sie dann als erste für die Greifer wieder zugängliche Restglastafel parkt (Fig. 8b).

Wenn das Programm der Schneidlinie 72 die im Zwischenspeicherfach 12a horizontal zwischen den beiden Restglastafeln 19a und 19c parkende Restglastafel 19b anfordert, werden die Greifer 62 vor das Speicherfach 12a positioniert, fahren in Richtung Restglastafel 19c vor, greifen die Restglastafel 19c und ziehen sie auf die Röllchenbahnen 58 der Auflagetischeinrichtung 50 (Fig. 8c).

Währenddessen oder danach wird die Transportvorrichtung 18 auf die Höhe des Speicherfachs 12a verfahren und die Förderbänder 20 der Transportvorrichtung 18 werden in Richtung Zwischenspeicher 2 unter die Rohglastafeln 19a und 19b versetzt. Anschließend werden die Förderbänder 20 so weit angehoben, dass sie die Restglastafeln 19a, 19b zur Mitnahme kontaktieren. Die Förderbänder 20 werden dann angetrieben, so dass die Restglastafeln 19a, 19b in Richtung Auflagetischeinrichtung 50 geschoben werden, verbleiben aber im Speicherfach 12a. Die Greifer 62 haben währenddessen die Restglastafel 19c in eine möglichst weit vom Zwischenspeicher 2 entfernte Position verfrachtet, so dass zwischenspeichernah Platz für eine weitere Restglastafel verbleibt. Die Greifer 62 tauchen nach unten ab und fahren unter der Restglastafel 19c entlang wieder in Richtung Zwischenspeicher 2 (Fig. 8d).

Die Förderbänder 20 transportieren die beiden Restglastafeln 19a, 19b so weit in Richtung Auflagetischeinrichtung 50, dass die Greifer 62, die in die Übernahmeposition vor den Zwischenspeicher 2 gefahren sind, die Restglastafel 19b ergreifen können, während die Förderbänder 20 nach unten gefahren sind und die beiden Restglastafeln 19a, 19b freigegeben haben. Die Greifer 62 ergreifen die Restglastafel 19b und ziehen sie auf die Auflagetischeinrichtung 50, auf der auch die Restglastafel 19c lagert. Die Restglastafel 19a verbleibt dabei an ihrem Lagerort im Zwischenspeicher 2 (Fig. 8e). Im Anschluss daran fährt die Auflagetischeinrichtung 50 nach unten zur Schneidlinie 72 und die Greifer 62 übergeben die Restglastafel 19b an die Schneidlinie 72 (Fig. 8f). Danach fährt die Auflagetischeinrichtung 50 wieder nach oben vor das Zwischenspeicherfach 12a. Die Greifer 62 tauchen nach unten ab und fahren unterhalb der Restglastafel 19c bis zur rückwärtigen Kante der Restglastafel 19c. Währenddessen oder vorher oder danach werden die Förderbänder 20 angehoben und angetrieben und transportieren die Restglastafel 19a ein Stück zurück in das Zwischenspeicherfach 12a, so dass vor der Restglastafel 19a Platz für eine zu parkende Restglastafel, z. B. die Restglastafel 19c, geschaffen wird (Fig. 8g). Die Greifer 62 ergreifen dann die rückwärtige Kante der Restglastafel 19c und schieben die Restglastafel 19c in das Zwischenspeicherfach 12a (Fig. 8h).

Die oben beschriebene Verfahrensweise ist lediglich beispielhaft. Wesentlich ist, dass nach der Erfindung in einem Zwischenspeicherfach eines Zwischenspeichers horizontal mehrere hintereinander angeordnete Restglastafeln geparkt werden und dass auf jede beliebige geparkte Restglastafel Zugriff möglich ist, um die ausgewählte Restglastafel einer Schneidlinie zuzuführen. Selbstverständlich ist es auch möglich, die Positionen von geparkten Restglastafeln im Zwischenspeicher zu verändern, um z. B. Restglastafeln auf andere Positionen im Zwischenspeicher zu versetzen. Dabei arbeitet die erfindungsgemäße Zwischenspeichervorrichtung völlig unabhängig von dem Betrieb der Schneidlinie, der sie zugeordnet ist.

Die Erfindung betrifft somit ein Verfahren zum Betreiben eines Zwischenspeichers für Restglastafeln, in dem Restglastafeln in horizontalen, übereinander angeordneten Speicherfächern horizontal auf Lagerelementen liegend lagern und in mindestens einem Speicherfach mehrere Restglastafeln mit Abstand hintereinander gelagert sind. Beim Entnehmen von Restglastafeln aus dem Speicherfach wird mindestens eine der Restglastafeln im Speicherfach von den Lagerelementen abgehoben, in Entnahmerichtung eine vorbestimmte Strecke nach vorne befördert und wieder auf restglasfreie Lagerelemente des Speicherfachs abgelegt wird. Beim Befüllen eines Speicherfachs mit mehreren Restglastafeln wird mindestens eine sich bereits im Speicherfach befindende Restglastafel von den Lagerelementen abgehoben, in Einschubrichtung eine vorbestimmte Strecke nach hinten tiefer in das Speicherfach befördert und wieder auf restglastafelfreie Lagerelemente abgelegt. Zweckmäßigerweise wird die abzuhebende Restglastafel zum Abheben an ihren Seitenkanten oder unter ihren Seitenkantenbereichen oder auf ihren Seitenkantenbereichen erfasst. Vorzugsweise wird die abzuhebende Restglastafel mit einer Transportbandeinrichtung frei untergriffen, die Transportbandvorrichtung angehoben und deren Transportband wird angetrieben, wobei die Restglastafel mit dem Förderband abgehoben und befördert wird. Vorzugsweise werden gleichzeitig mindestens zwei Restglastafeln in einem Speicherfach abgehoben und befördert, während eine Restglastafel in das Speicherfach eingeschoben oder herausgezogen wird. Zweckmäßigerweise wird zum Zwischenspeichern einer Restglastafel in einem Speicherfach die Restglastafel horizontal auf einer auf-und abfahrbar vor dem Zwischenspeicher angeordneten Auflagetischeinrichtung einer Beschickungseinrichtung lagernd, vertikal vor das Speicherfach befördert und mit einer in die Auflagetischeinrichtung integrierten Greifereinrichtung in das Speicherfach geschoben, wonach die eingeschobene Restglastafel mit in den Zwischenspeicher integrierten Fördermitteln angehoben, danach tiefer in das Speicherfach transportiert und wieder abgesenkt wird. Ebenfalls zweckmäßig ist, zum Entnehmen zweier Rohglastafeln aus einem Speicherfach zunächst die in Entnahmerichtung vordere Restglastafel an ihrer in Entnahmerichtung vorne positionierten Vorderkante mit einer Greifereinrichtung einer mit dem Zwischenspeicher kombinierten Beschickungseinrichtung erfasst und aus dem Speicherfach auf eine horizontale Auflagetischeinrichtung der Beschickungseinrichtung gezogen wird, die Greifereinrichtung danach die auf der Auflagetischeinrichtung liegende Restglastafel freigibt und die Restglastafel unterfährt und vor die Entnahmestelle des Speicherfachs fährt, wobei zwischenzeitlich die sich im Speicherfach noch befindliche zweite Restglastafel mit in den Zwischenspeicher integrierten Fördermitteln angehoben und zur Entnahmestelle befördert wird, woraufhin die zweite Restglastafel von der Greifereinrichtung erfasst und aus dem Speicherfach gezogen wird.

Eine erfindungsgemäße Vorrichtung zum Betreiben eines Zwischenspeichers für Restglastafeln ist verfahrenstechnisch so eingerichtet, dass sie einer Restglastafeln erzeugenden Schneidlinie für Glastafeln zugeordnet werden und zur Entnahme von Restglastafeln aus der Schneidlinie und Verbringung in die Zwischenspeichervorrichtung sowie zur Entnahme von Restglastafeln aus der Zwischenspeichervorrichtung und Verbringung zur Schneidlinie verwendet werden kann, wobei die Zwischenspeichervorrichtung zumindest einen einen kubischen Innenraum aufweisenden Zwischenspeicher mit mehreren horizontalen übereinander angeordneten Speicherfächern und eine Beschickungseinrichtung aufweist zum horizontalen Beschicken der Speicherfächer des Zwischenspeichers mit Restglastafeln und zur horizontalen Entnahme von Restglastafeln aus dem Speicherfach des Zwischenspeichers. Dabei ist wesentlich, dass die Speicherfächer eine Breite haben, die der Breite einer in der Schneidlinie aufzuteilenden Rohglastafel entspricht und eine Tiefe haben, die das Lagern von mehreren auf Abstand hintereinander angeordneten Restglastafeln ermöglicht, insbesondere auch das Lagern einer Rohglastafel ermöglicht. Des Weiteren ist wesentlich, dass an beiden Längsseiten des Zwischenspeichers ein auf- und abfahrbares Förderelement angeordnet ist und die Förderelemente Mittel aufweisen zum gleichzeitigen untergreifenden Erfassen einer Restglastafel an ihren beiden Seitenkanten oder in ihren beiden Seitenkantenbereichen, insbesondere in den Seitenkantenbereichen einen seitlichen Zwischenraum zwischen zwei übereinander in benachbarten Speicherfächern lagernder Restglastafeln nutzen. Zudem weisen die Förderelemente Mittel zum Anheben und zum Transportieren von Restglastafeln in Entnahmerichtung oder Einschubrichtung des Zwischenspeichers auf. Das Förderelement ist vorzugsweise an einer auf- und abfahrbaren Transportvorrichtung horizontal in Richtung Innenraum des Zwischenspeichers vor und zurück versetzbar angeordnet, wobei zweckmäßigerweise jedes Förderelement mindestens ein Förderband aufweist, das sich parallel zu einer Seitenkante einer eingelagerten Restglastafel horizontal erstreckt und dessen Abstand zwischen seinem oberen Trum und seinem unteren Trum geringer ist als der vertikale Abstand zwischen zwei Seitenkantenbereichen zweier unmittelbar übereinander in jeweils einem Speicherfach gelagerter Restglastafeln.

Eine Ausführungsform der Erfindung sieht vor, dass die Transportvorrichtung zwei als Trägerelement dienende vertikal auf Abstand angeordnete horizontal liegende Tragbalken aufweist, zwischen denen mindestens zwei sich quer zur Längserstreckung der Tragbalken und horizontal erstreckende Kniehebel angeordnet sind, deren erster Hebelarm in seinem Längsmittenbereich zwischen den Tragbalken um eine vertikale Achse drehbar gelagert ist und deren zweiter Hebelarm sich vom Kniegelenk zu einer Förderbandeinrichtung erstreckt, die als Förderelement fungiert, wobei an der Förderbandeinrichtung das freie Ende des zweiten Hebelarms gelenkig befestigt ist und das freie Ende des ersten Hebelarms gelenkig an einer Betätigungseinrichtung sitzt, mit der die Kniehebel gleichzeitig und gleichsinnig streckbar und knickbar sind. Vorzugsweise weist die Förderbandeinrichtung das mindestens eine endlos geführte Transportband auf und ist an den Tragbalken horizontal in Richtung Zwischenspeicher versetzbar gelagert. Außerdem weist die Förderbandeinrichtung zweckmäßigerweise quer zu den Tragbalken und zwischen letzteren sich erstreckende Wellen auf, die zwischen den Tragbalken gleitbar gelagert sind.

Der Antrieb des Transportbandes erfolgt vorzugsweise über einen an den Tragbalken befestigten Antriebsmotor, der eine Welle der Förderbandeinrichtung bzw. des Förderbandes antreibt.

Nach der Erfindung sind die beiden längsseitig angeordneten Transportvorrichtungen synchron vertikal auf und ab verfahrbar angeordnet und stehen mit einer Antriebsvorrichtung für das Auf- und Abfahren in Verbindung.

Eine erfindungsgemäße Beschickungseinrichtung weist eine horizontale Auflagetischeinrichtung zur Aufnahme und zum horizontalen Transportieren von Restglastafeln auf, wobei die Vorderkante der Auflagetischeinrichtung eng benachbarte zur Vorderfrontebene oder Rückfrontebene des Zwischenspeichers angeordnet ist und wobei die Auflagetischeinrichtung mit einer Hubeinrichtung in Verbindung steht, die die Auflagetischeinrichtung vertikal in Doppelpfeilrichtung hoch- und runterfahren kann. Dabei verfügt die Auflagetischeinrichtung zweckmäßigerweise über mindestens eine Greifereinrichtung, die vorzugsweise einen klemmenden Greifer aufweist, der an einem horizontal geführten Antriebsmittel angeordnet ist, das sich vorzugsweise über die gesamte Länge der Auflagetischeinrichtung in einem Spalt der Auflagetischeinrichtung erstreckt und mit dem der Greifer vor- und zurück verfahrbar ist, wobei der Greifer ein in Richtung Zwischenspeicher gerichtetes schließbares Greifmaul aufweist und der Greifer unter das Niveau der Auflagetischeinrichtung versetzbar angeordnet ist. Dabei dienen zur Bewegung der Greiferplatten 65, 66 und des Greifers jeweils eine Kolbenzylindereinheit, die an einer Montageplatte angeordnet sind, wobei die Montageplatte am horizontal geführten Antriebsmittel sitzt.

## Patentansprüche

1. Verfahren zum Betreiben eines Zwischenspeichers für Restglastafeln, in dem Restglastafeln in horizontalen, übereinander angeordneten Speicherfächern horizontal auf Lagerelementen liegend lagern und in mindestens einem Speicherfach mehrere Restglastafeln mit Abstand hintereinander gelagert sind,
**dadurch gekennzeichnet,dass**
- beim Entnehmen von Restglastafeln aus dem Speicherfach mindestens eine der Restglastafeln im Speicherfach von den Lagerelementen abgehoben, in Entnahmerichtung eine vorbestimmte Strecke nach vorne befördert und wieder auf restglasfreie Lagerelemente des Speicherfachs abgelegt wird,
- beim Befüllen eines Speicherfachs mit mehreren Restglastafeln mindestens eine sich bereits im Speicherfach befindende Restglastafel von den Lagerelementen abgehoben, in Einschubrichtung eine vorbestimmte Strecke nach hinten tiefer in das Speicherfach befördert und wieder auf restglastafelfreie Lagerelemente abgelegt wird.

2. Verfahren nach Anspruch 1,
**dadurch gekennzeichnet, dass**
die abzuhebende Restglastafel zum Abheben an ihren Seitenkanten oder unter ihren Seitenkantenbereichen oder auf ihren Seitenkantenbereichen erfasst wird.

3. Verfahren nach Anspruch 1 und/oder 2,
**dadurch gekennzeichnet, dass**
die abzuhebende Restglastafel mit einer Transportbandeinrichtung frei untergriffen wird, die Transportbandeinrichtung angehoben und deren Transportband angetrieben wird, wobei die Restglastafel mit dem Förderband abgehoben und befördert wird.

4. Verfahren nach einem oder mehreren der Ansprüche 1 bis 3,
**dadurch gekennzeichnet, dass**
gleichzeitig mindestens zwei Restglastafeln in einem Speicherfach abgehoben und befördert werden, während eine Restglastafel in das Speicherfach eingeschoben oder herausgezogen wird.

5. Verfahren nach einem oder mehreren der Ansprüche 1 bis 4,
**dadurch gekennzeichnet, dass**
zum Zwischenspeichern einer Restglastafel in einem Speicherfach die Restglastafel horizontal auf einer auf- und abfahrbar vor dem Zwischenspeicher angeordneten Auflagetischeinrichtung einer Beschickungseinrichtung lagernd vertikal vor das Speicherfach befördert und mit einer in die Auflagetischeinrichtung integrierten Greifereinrichtung in das Speicherfach geschoben wird, wonach die eingeschobene Restglastafel mit in den Zwischenspeicher integrierten Fördermitteln angehoben, danach tiefer in das Speicherfach transportiert und wieder abgesenkt wird.

6. Verfahren nach einem oder mehreren der Ansprüche 1 bis 4,
**dadurch gekennzeichnet, dass**
zum Entnehmen zweier Restglastafeln aus einem Speicherfach zunächst die in Entnahmerichtung vordere Restglastafel an ihrer in Entnahmerichtung vorne positionierten Vorderkante mit der Greifereinrichtung einer mit dem Zwischenspeicher kombinierten Beschickungseinrichtung erfasst und aus dem Speicherfach auf eine horizontale Auflagetischeinrichtung der Beschickungseinrichtung gezogen wird, die Greifereinrichtung danach die auf der Auflagetischeinrichtung liegende Restglastafel freigibt und die Restglastafel unterfährt und vor die Entnahmestelle des Speicherfachs fährt, wobei zwischenzeitlich die sich im Speicherfach noch befindliche zweite Restglastafel mit in den Zwischenspeicher integrierten Fördermitteln angehoben und zur Entnahmestelle befördert wird, woraufhin die zweite Restglastafel von der Greifereinrichtung erfasst und aus dem Speicherfach gezogen wird.

7. Vorrichtung zum Betreiben eines Zwischenspeichers (1) für Restglastafeln (19), die verfahrenstechnisch so eingerichtet ist, dass sie einer Restglastafeln (19) erzeugenden Schneidlinie (72) für Glastafeln zugeordnet werden kann und zur Entnahme von Restglastafeln (19) aus der Schneidlinie (72) und Verbringung in die Zwischenspeichervorrichtung (1) sowie zur Entnahme von Restglastafeln (19) aus der Zwischenspeichervorrichtung (1) und Verbringung zur Schneidlinie (72) dienen kann, wobei die Zwischenspeichervorrichtung (1) zumindest einen einen kubischen Innenraum aufweisenden Zwischenspeicher (2) mit mehreren horizontalen übereinander angeordneten Speicherfächern (12) und eine Beschickungseinrichtung (3) aufweist zum horizontalen Beschicken der Speicherfächer (12) des Zwischenspeichers (2) mit Restglastafeln (19) und zur horizontalen Entnahme von Restglastafeln (19) aus dem Speicherfach (12) des Zwischenspeichers (2),
**dadurch gekennzeichnet, dass**
- die Speicherfächer (12) eine Breite haben, die der Breite einer in der Schneidlinie (72) aufzuteilenden Rohglastafel entspricht und eine Tiefe haben, die das Lagern von mehreren auf Abstand hintereinander angeordneten Restglastafeln (19) ermöglicht, insbesondere auch das Lagern einer Rohglastafel ermöglicht,
- an beiden Längsseiten des Zwischenspeichers (2) ein auf- und ab fahrbares Förderelement (17) angeordnet ist und die Förderelemente (17) Mittel zum gleichzeitigen untergreifenden Erfassen einer Restglastafel (19) an ihren beiden Seitenkanten (16) oder in ihren beiden Seitenkantenbereichen, insbesondere in den Seitenkantenbereichen einen seitlichen Zwischenraum (19d) zwischen zwei übereinander in benachbarten Speicherfächern (12) lagernder Restglastafeln (19) nutzend, und Mittel zum Anheben und zum Transportieren in Entnahmerichtung oder Einschubrichtung (11) des Zwischenspeichers (2) aufweisen.

8. Vorrichtung nach Anspruch 7,
**dadurch gekennzeichnet, dass**
das Förderelement (17) an einer auf- und ab fahrbaren Transportvorrichtung (18) horizontal in Richtung Innenraum des Zwischenspeichers (2) vor und zurück versetzbar angeordnet ist.

9. Vorrichtung nach Anspruch 8,
**dadurch gekennzeichnet, dass**
jedes Förderelement (17) mindestens ein Förderband (20) aufweist, das sich parallel zu einer Seitenkante (16) einer eingelagerten Restglastafel (19) horizontal erstreckt und dessen Abstand zwischen seinem oberen Trum und seinem unteren Trum geringer ist als der vertikale Abstand D zwischen zwei Seitenkantenbereichen zweier unmittelbar übereinander in jeweils einem Speicherfach (12) gelagerter Restglastafeln (19).

10. Vorrichtung nach Anspruch 8 und/oder 9,
**dadurch gekennzeichnet,dass**
die Transportvorrichtung (18) zwei als Trägerelement (21 a) dienende, vertikal auf Abstand angeordnete, horizontal liegende Tragbalken (21, 22) aufweist, zwischen denen mindestens zwei sich quer zur Längserstreckung der Tragbalken (21, 22) und horizontal erstreckende Kniehebel (23) angeordnet sind, deren erster Hebelarm (24) in seinem Längsmittenbereich zwischen den Tragbalken (21, 22) um eine vertikale Achse (25) drehbar gelagert ist und deren zweiter Hebelarm (26) sich vom Kniehebeigelenk (27) zu einer Förderbandeinrichtung (28) erstreckt, die als Förderelement (17) fungiert, wobei an der Förderbandeinrichtung (28) das freie Ende des zweiten Hebelarms (26) gelenkig befestigt ist und das freie Ende des ersten Hebelarms (24) gelenkig an einer Betätigungseinrichtung (29) sitzt, mit der die Kniehebel (23) gleichzeitig und gleichsinnig streckbar und knickbar sind.

11. Vorrichtung nach Anspruch 10,
**dadurch gekennzeichnet, dass**
die Förderbandeinrichtung (28) das mindestens eine endlos geführte Transportband (20) aufweist und an den Tragbalken (21, 22) horizontal in Richtung Zwischenspeicher (2) versetzbar gelagert ist.

12. Vorrichtung nach Anspruch 11,
**dadurch gekennzeichnet, dass**
die Förderbandeinrichtung (28) quer zu den Tragbalken (21, 22) und zwischen letzteren sich erstreckende Wellen (33) aufweist, die zwischen den Tragbalken (21, 22) gleitbar gelagert sind.

13. Vorrichtung nach Anspruch 12,
**dadurch gekennzeichnet, dass**
der Antrieb des Transportbands (20) über einen an den Tragbalken (21, 22) befestigten Antriebsmotor (35) erfolgt, der eine Welle (33) der Förderbandeinrichtung (28) bzw. des Förderbandes (20) antreibt.

14. Vorrichtung nach einem oder mehreren der Ansprüche 8 bis 13,
**dadurch gekennzeichnet, dass**
die Tragbalken (21, 22) mit vertikalen Gleitführungen vertikal gleitbar an Tragsäulen (6) jeweils an einer Längsseite des Zwischenspeichers (2) lagern.

15. Vorrichtung nach Anspruch 14,
**dadurch gekennzeichnet, dass**
die beiden längsseitig angeordneten Transportvorrichtungen (18) synchron vertikal auf- und ab verfahrbar angeordnet sind und mit einer Antriebsvorrichtung für das Auf- und Abfahren in Verbindung stehen.

16. Vorrichtung nach einem oder mehreren der Ansprüche 7 bis 15,
**dadurch gekennzeichnet, dass**
die Beschickungseinrichtung (3) eine horizontale Auflagetischeinrichtung (50) zur Aufnahme und zum horizontalen Transportieren von Restglastafeln (19) aufweist, wobei die Vorderkante (51) der Auflagetischeinrichtung (50) eng benachbart zur Vorderfrontebene (52) oder Rückfrontebene (53) des Zwischenspeichers (2) angeordnet ist und wobei die Auflagetischeinrichtung (50) mit einer Hubeinrichtung (54) in Verbindung steht, die die Auflagetischeinrichtung (50) vertikal in Doppelpfeilrichtung (49) hoch- und runterfahren kann.

17. Vorrichtung nach Anspruch 16,
**dadurch gekennzeichnet, dass**
die Auflagetischeinrichtung (50) über mindestens eine Greifereinrichtung (61) verfügt, die zweckmäßigerweise einen klemmenden Greifer (62) aufweist, der an einem horizontal geführten Antriebsmittel (63) angeordnet ist, das sich vorzugsweise über die gesamte Länge der Auflagetischeinrichtung (50) in einem Spalt (60) der Auflagetischeinrichtung (50) erstreckt, und mit dem Greifer (62) in Doppelpfeilrichtung (11a) vor- und zurück verfahrbar ist und wobei der Greifer (62) ein in Richtung Zwischenspeicher (2) gerichtetes schließbares Greifmaul (64) aufweist und der Greifer (62) unter das Niveau der Auflagetischeinrichtung (50) versetzbar angeordnet ist.

18. Vorrichtung nach Anspruch 17,
**dadurch gekennzeichnet,dass**
das Greifmaul (64) von einer oberen Greiferplatte (65) und einer unteren Greiferplatte (66) gebildet wird, die Greiferplatten (65, 66) unabhängig voneinander auf und ab bewegbar angetrieben sind und an einem Montagebauteil (67) sitzen, wobei das Montagebauteil (67) mit dem Antriebsmittel (63) in fester Mitnahmeverbindung steht.

19. Vorrichtung nach Anspruch 18,
**dadurch gekennzeichnet, dass** die obere Greiferplatte (65) mit einer an der Montageplatte (67) sitzenden Kolbenzylindereinheit (68) verbunden ist und die untere Greiferplatte (66) mit einer Kolbenzylindereinheit (69) in Verbindung steht, die sich ebenfalls an der Montageplatte (67) abstützt und zudem eine Kolbenzylindereinheit (70) an der Montageplatte (67) angeordnet ist, die die Gesamtheit des Greifers (62) auf und ab versetzen kann.

## Claims

1. A method of operating a temporary store for residual glass panels, in which residual glass panels are stored, lying horizontally on bearing elements, in horizontal storage compartments arranged one above the other and in at least one storage compartment there are stored a plurality of residual glass panels so as to be at a distance behind one another,
**characterised in that**
- Upon removal of residual glass panels from the storage compartment, at least one of the residual glass panels in the storage compartment is lifted from the bearing elements, is conveyed forwards in the removal direction by a predetermined distance and is deposited again on residual-glass-free bearing elements of the storage compartment,
- Upon filling of a storage compartment with a plurality of residual glass panels, at least one residual glass panel already located in the storage compartment is lifted from the bearing elements, is conveyed rearwards further into the storage compartment in the insertion direction by a predetermined distance and is deposited again on residual-glass-panel-free bearing elements.

2. A method according to claim 1, **characterised in that** the residual glass panel to be lifted is for lifting grasped at its lateral edges or below its lateral edge regions or on its lateral edge regions.

3. A method according to claim 1 and/or 2, **characterised in that** the residual glass panel to be lifted is freely gripped below by a conveying belt device, the conveying belt device is raised and its conveying belt is driven, wherein the residual glass panel is lifted and conveyed by the conveyor belt.

4. A method according to one or more of claims 1 to 3, **characterised in that** simultaneously at least two residual glass panels in a storage compartment are lifted and conveyed, while one residual glass panel is inserted into or withdrawn from the storage compartment.

5. A method according to one or more of claims 1 to 4, **characterised in that** for temporary storage of a residual glass panel in a storage compartment, the residual glass panel is, supported horizontally on a supporting table device, arranged in front of the temporary store so as to be movable up and down, of a loading device, conveyed vertically in front of the storage compartment and is pushed into the storage compartment by a gripper device integrated into the supporting table device, whereupon the inserted residual glass panel is raised by means of conveying means integrated into the temporary store, thereafter is transported further into the storage compartment and is lowered again.

6. A method according to one or more of claims 1 to 4, **characterised in that** for removal of two residual glass panels from a storage compartment, firstly the front residual glass panel in the removal direction is seized at its front edge positioned in front in the removal direction by means of the gripper device of a loading device combined with the temporary store and is drawn from the storage compartment onto a horizontal supporting table device of the loading device, the gripper device thereafter releases the residual glass panel lying on the supporting table device and travels underneath the residual glass panel and travels in front of the removal site of the storage compartment, wherein in the meantime the second residual glass panel, still located in the storage compartment, is raised by means of conveying means integrated into the temporary store and is conveyed to the removal site, whereupon the second residual glass panel is seized by the gripper device and drawn out of the storage compartment.

7. A device for operating a temporary store (1) for residual glass panels (19), which device is constructed process-engineering-wise in such a manner that it can be associated with a glass panel cutting line (72) producing residual glass panels (19) and can be used for removal of residual glass panels (19) from the cutting line (72) and bringing thereof into the temporary store device (1) as well as for removal of residual glass panels (19) from the temporary store device (1) and bringing thereof to the cutting line (72), wherein the temporary store device (1) has at least one temporary store (2), of cubic interior, with a plurality of horizontal storage compartments (12) arranged one above the other and has a loading device (3) for horizontal loading of the storage compartments (12) of the temporary store (2) with residual glass panels (19) and for horizontal removal of residual glass panels (19) from the storage compartment (12) of the temporary store (2), **characterised in that**
- The storage compartments (12) have a width corresponding to the width of a raw glass panel to be divided up in the cutting line (72) and have a depth which enables the storage of a plurality of residual glass panels (19) arranged at a distance one behind the other, in particular also the storage of a raw glass panel,
- A conveying element (17), movable up and down, is arranged at both long sides of the temporary store (2) and the conveying elements (17) have means for the simultaneous seizing, in a manner so as to grip underneath, of a residual glass panel (19) at its two lateral edges (16) or in its two lateral edge regions, in particular utilizing in the lateral edge regions a lateral clearance (19d) between two residual glass panels (19) stored one above the other in adjacent storage compartments (12), and have means for raising and conveying in the removal direction or insertion direction (11) of the temporary store (2).

8. A device according to claim 7, **characterised in that** the conveying element (17) is arranged on a conveying device (18), movable up and down, so as to be displaceable forward and backward horizontally in the direction of the interior of the temporary store (2).

9. A device according to claim 8, **characterised in that** each conveying element (17) has at least one conveyor belt (20) which extends horizontally parallel to a lateral edge (16) of a stored residual glass panel (19) and whose spacing between its upper strand and its lower strand is less than the vertical spacing D between two lateral edge regions of two residual glass panels (19) stored directly one above the other in respective storage compartments (12).

10. A device according to claim 8 and/or 9, **characterised in that** the conveying device (18) has two horizontally-lying supporting beams (21, 22), serving as a support element (21 a) and arranged vertically spaced apart, between which there are arranged at least two toggles (23), extending transversely to the longitudinal extension of the supporting beams (21, 22) and horizontally, the first lever arm (24) of which is rotatably mounted in its longitudinal central region about a vertical axis (25) between the supporting beams (21, 22) and whose second lever arm (26) extends from the toggle joint (27) to a conveyor belt device (28) acting as a conveying element (17), wherein the free end of the second lever arm (26) is secured in an articulated manner to the conveyor belt device (28) and the free end of the first lever arm (24) sits in an articulated manner on an actuating device (29) with which the toggles (23) can be extended and bent simultaneously and in the same direction.

11. A device according to claim 10, **characterised in that** the conveyor belt device (28) has the at least one endlessly guided conveying belt (20) and is mounted on the supporting beams (21, 22) so as to be displaceable horizontally in the direction of the temporary store (2).

12. A device according to claim 11, **characterised in that** the conveyor belt device (28) has shafts (33) extending transversely to the supporting beams (21, 22) and therebetween, which shafts are slideably mounted between the bearing beams (21, 22).

13. A device according to claim 12, **characterised in that** the drive of the conveyor belt (20) takes place via a drive motor (35) secured to the supporting beams (21, 22), which drive motor (35) drives a shaft (33) of the conveyor belt device (28) or of the conveyor belt (20).

14. A device according to one or more of claims 8 to 13, **characterised in that** the supporting beams (21, 22) are by means of vertical slide guides mounted in a vertically slidable manner on supporting columns (6), on each long side of the temporary store (2).

15. A device according to claim 14, **characterised in that** the two conveying devices (18) arranged at the long sides are arranged so as to be synchronously movable up and down in a vertical manner and are connected to a drive device for the upward and downward travel.

16. A device according to one or more of claims 7 to 15, **characterised in that** the loading device (3) has a horizontal supporting table device (50) to receive and horizontally transport residual glass panels (19), wherein the front edge (51) of the supporting table device (50) is arranged closely adjacent to the leading face plane (52) or rear face plane (53) of the temporary store (2) and wherein the supporting table device (50) is connected to a lifting device (54) which can raise and lower the supporting table device (50) vertically in the double arrow direction (49).

17. A device according to claim 16, **characterised in that** the supporting table device (50) has at its disposal at least one gripper device (61), which advantageously has a clamping gripper (62) arranged on a horizontally guided drive means (63) preferably extending over the entire length of the supporting table device (50) in a gap (60) of the supporting table device (50), and can be moved forward and back in double arrow direction (11a) with the gripper (62) and wherein the gripper (62) has a closable gripping jaw (64) directed in the direction of temporary store (2) and the gripper (62) is arranged so as to be displaceable below the level of the supporting table device (50).

18. A device according to claim 17, **characterized in that** the gripping jaw (64) is formed by an upper gripper plate (65) and a lower gripper plate (66), the gripper plates (65, 66) are driven so as to be movable up and down independently of one another and are located on a mounting component (67), wherein the mounting component (67) is in a secure entrainment connection with the drive means (63).

19. A device according to claim 18, **characterised in that** the upper gripper plate (65) is connected to a piston/cylinder unit (68) located on the mounting plate (67) and the lower gripper plate (66) is connected to a piston/cylinder unit (69) which is likewise supported on the mounting plate (67) and moreover a piston/cylinder unit (70) is arranged on the mounting plate (70) and can displace the entirety of the gripper (62) up and down.

## Revendications

1. Procédé permettant de faire fonctionner un élément de stockage temporaire pour des piles de verre résiduel, dans lequel des piles de verre résiduel reposent à l'horizontal sur des éléments de support dans des compartiments de stockage horizontaux disposés les uns sur les autres et plusieurs piles de verre résiduel sont logées les unes derrières les autres à distance dans au moins un compartiment de stockage,
**caractérisé en ce que**
- lors du retrait de piles de verre résiduel en dehors du compartiment de stockage, au moins une des piles de verre résiduel dans le compartiment de stockage est soulevée des éléments de support, est transportée vers l'avant en effectuant un parcours prédéfini dans la direction de retrait puis est reposée sur des éléments de support sans verre résiduel du compartiment de stockage,
- lors du remplissage d'un compartiment de stockage avec plusieurs piles de verre résiduel, au moins une pile de verre résiduel se trouvant déjà dans le compartiment de stockage est soulevée des éléments de support, est transportée vers l'arrière plus profondément dans le compartiment de stockage en effectuant un parcours prédéfini dans la direction d'insertion puis est reposée sur des éléments de support sans piles de verre résiduel.

2. Procédé selon la revendication 1,
**caractérisé en ce que**
la pile de verre résiduel à retirer destinée à être soulevée est saisie au niveau de ses arêtes latérales soit sous ses zones d'arêtes latérales soit sur ses zones d'arêtes latérales.

3. Procédé selon la revendication 1 et/ou 2,
**caractérisé en ce que**
la pile de verre résiduel à retirer est saisie par le bas librement à l'aide d'un dispositif de bande transporteuse, **en ce que** le dispositif de bande transporteuse est relevé et la bande transporteuse de ce dernier est entraînée, dans lequel la pile de verre résiduel est soulevée et transportée à l'aide de la bande de convoyage.

4. Procédé selon l'une quelconque ou plusieurs des revendications 1 à 3,
**caractérisé en ce que**
simultanément au moins deux piles de verre résiduel d'un compartiment de stockage sont soulevées et transportées, tandis qu'une pile de verre résiduel est insérée dans le compartiment de stockage ou en est retirée.

5. Procédé selon l'une quelconque ou plusieurs des revendications 1 à 4,
**caractérisé en ce que**
la pile de verre résiduel est transportée de manière verticale avant le stockage horizontale dans le compartiment sur un dispositif de plateau d'appui disposé avant l'élément de stockage temporaire pouvant se déployer et se rétracter et est insérée dans le compartiment de stockage à l'aide d'un dispositif de préhension intégré dans le dispositif de plateau d'appui aux fins du stockage temporaire d'une pile de verre résiduel dans un compartiment de stockage, la pile de verre résiduel insérée étant par la suite relevée à l'aide de moyens de convoyage intégrés dans l'élément de stockage temporaire puis étant transportée plus profondément dans le compartiment de stockage avant d'être à nouveau abaissée.

6. Procédé selon l'une quelconque ou plusieurs des revendications 1 à 4,
**caractérisé en ce que**
tout d'abord, aux fins du retrait de deux piles de verre résiduel hors du compartiment de stockage, la pile de verre résiduel située le plus à l'avant dans le dispositif de retrait est saisie au niveau de son arête avant positionnée à l'avant dans le dispositif de retrait, à l'aide du dispositif de préhension d'un dispositif de chargement combiné à l'élément de stockage temporaire, puis est tirée hors du compartiment de stockage sur un dispositif de plateau d'appui horizontal du dispositif de chargement, **en ce que** le dispositif de préhension libère par la suite la pile de verre résiduel se trouvant sur le dispositif de plateau d'appui et soutient la pile de verre résiduel et la déplace avant l'endroit de retrait du compartiment de stockage, dans lequel, entre-temps la deuxième pile de verre résiduel se trouvant encore dans le compartiment de stockage est relevée à l'aide des moyens de convoyage intégrés dans l'élément de stockage temporaire et est transportée en direction de l'emplacement de retrait, la deuxième pile de verre résiduel étant après quoi saisie par le dispositif de préhension et tirée en dehors du compartiment de stockage.

7. Dispositif servant à faire fonctionner un élément de stockage temporaire (1) pour des piles de verre résiduel (19), lequel dispositif est configuré suivant la technique selon le procédé de telle manière qu'il peut être associé à une ligne de découpe (72) pour des piles de verre, produisant des piles de verre résiduel (19) et qu'il peut servir à retirer des piles de verre résiduel (19) hors de la ligne de découpe (72) et à les amener dans le dispositif de stockage temporaire (1) ainsi qu'à retirer des piles de verre résiduel (19) en dehors du dispositif de stockage temporaire (1) et à les amener en direction de la ligne de découpe (72), dans lequel le dispositif de stockage temporaire (1) présente au moins un élément de stockage temporaire (2) présentant un espace intérieur cubique, doté de plusieurs compartiments de stockage (12) horizontaux disposés les uns sur les autres et un dispositif de chargement (3) afin de charger à l'horizontale les compartiments de stockage (12) de l'élément de stockage temporaire (2) avec des piles de verre résiduel (19) et afin de retirer horizontalement des piles de verre résiduel (19) en dehors du compartiment de stockage (12) de l'élément de stockage temporaire (2),
**caractérisé en ce que**
- les compartiments de stockage (12) présentent une largeur qui correspond à la largeur d'une pile de verre résiduel qui doivent être découpée dans la ligne de découpe (72) et présentent une profondeur qui permet de loger plusieurs piles de verre résiduel (19) disposées à distance les unes derrière les autres, en particulier qui permet également de loger une pile de verre résiduel,
- un élément de convoyage (17) pouvant se déployer et se rétracter est disposé au niveau des deux côtés longitudinaux de l'élément de stockage temporaire (2), et les éléments de convoyage (17) présentent des moyens permettant de saisir par le bas simultanément une pile de verre résiduel (19) au niveau de ses deux arêtes latérales (16) ou dans ses deux zones d'arêtes latérales, en utilisant en particulier dans les zones d'arêtes latérales un espace intermédiaire latéral (19d) entre deux piles de verre résiduel (19) à loger l'une sur l'autre dans des compartiments de stockage (12) adjacents, et des moyens servant au relevage et au transport dans la direction de retrait ou dans la direction d'insertion (11) de l'élément de stockage temporaire (2).

8. Dispositif selon la revendication 7,
**caractérisé en ce que**
l'élément de convoyage (17) est disposé de manière à pouvoir être décalé vers l'avant et vers l'arrière au niveau d'un dispositif de transport (18) pouvant se déployer et se rétracter, horizontalement dans la direction de l'espace intérieur de l'élément de stockage temporaire (2).

9. Dispositif selon la revendication 8,
**caractérisé en ce que**
chaque élément de convoyage (17) présente au moins une bande de convoyage (20) qui s'étend à l'horizontale de manière parallèle par rapport à une arête latérale (16) d'une pile de verre résiduel (19) logée et dont la distance entre son brin supérieur et son brin inférieur est inférieure à la distance verticale D entre deux zones d'arêtes latérales de deux piles de verre résiduel (19) logées directement l'une sur l'autre dans respectivement un compartiment de stockage (12).

10. Dispositif selon la revendication 8 et/ou 9,
**caractérisé en ce que**
le dispositif de transport (18) présente deux poutres de support (21, 22) horizontales servant d'élément de support (21a) et disposées verticalement de manière espacée, entre lesquelles sont disposés au moins deux leviers coudés (23) s'étendant horizontalement et transversalement par rapport à l'extension longitudinale des poutres de support (21, 22), dont le premier bras de levier (24) est logé dans sa zone médiane longitudinale entre les poutres de support (21, 22) de manière à pouvoir tourner autour d'un axe (25) vertical et dont le deuxième bras de levier (26) s'étend depuis l'articulation du levier coudé (27) vers un dispositif de bande de convoyage (28), lequel dispositif de bande de convoyage fait office d'élément de convoyage (17), dans lequel l'extrémité libre du deuxième bras de levier (26) est fixée de manière articulée au niveau du dispositif de bande de convoyage (28) et dans lequel l'extrémité libre du premier bras de levier (24) repose de manière articulée au niveau d'un dispositif d'actionnement (29), grâce auquel le levier coudé (23) peut être étendu et plié simultanément et dans un sens contraire.

11. Dispositif selon la revendication 10,
**caractérisé en ce que**
le dispositif de bande de convoyage (28) présente la bande transporteuse (20) guidée sans fin au moins au nombre d'une et est logé de manière à pouvoir être décalé au niveau des poutres de support (21, 22) à l'horizontale en direction de l'élément de stockage temporaire (2).

12. Dispositif selon la revendication 11,
**caractérisé en ce que**
le dispositif de bande de convoyage (28) présente des arbres (33) s'étendant de manière transversale par rapport aux poutres de support (21, 22) et entre ces dernières, lesquels arbres sont logés de manière à pouvoir glisser entre les poutres de support (21, 22).

13. Dispositif selon la revendication 12,
**caractérisé en ce que**
l'entraînement de la bande transporteuse (20) se fait par l'intermédiaire d'un moteur d'entraînement (35) fixé au niveau des poutres de support (21, 22), lequel moteur d'entraînement entraîne un arbre (33) du dispositif de bande de convoyage (28) ou de la bande de convoyage (20).

14. Dispositif selon l'une quelconque ou plusieurs des revendications 8 à 13,
**caractérisé en ce que**
les poutres de support (21, 22) dotées de glissières verticales reposent de manière à pouvoir glisser verticalement au niveau de colonnes de support (6) respectivement au niveau d'un côté longitudinal de l'élément de stockage temporaire (2).

15. Dispositif selon la revendication 14,
**caractérisé en ce que**
les deux dispositifs de transport (18) disposés côté longitudinal sont disposés de manière à pouvoir être déplacés en va-et-vient verticalement de manière synchrone et sont reliés à un dispositif d'entraînement pour le mouvement de va-et-vient.

16. Dispositif selon l'une quelconque ou plusieurs des revendications 7 à 15,
**caractérisé en ce que**
le dispositif de chargement (3) présente un dispositif de plateau d'appui (50) horizontal permettant de recevoir et de transporter horizontalement des piles de verre résiduel (19), dans lequel l'arête avant (51) du dispositif de plateau d'appui (50) est disposée de manière étroitement adjacente par rapport au plan frontal avant (52) ou au plan frontal arrière (53) de l'élément de stockage temporaire (2) et dans lequel le dispositif de plateau d'appui (50) est relié à un dispositif de levage (54) qui peut relever ou abaisser le dispositif de plateau d'appui (50) de manière verticale dans la direction de la double flèche (49).

17. Dispositif selon la revendication 16,
**caractérisé en ce que**
le dispositif de plateau d'appui (50) dispose d'au moins un dispositif de préhension (61), qui présente de manière appropriée un préhenseur (62) de serrage, qui est disposé au niveau d'un moyen d'entraînement (63) guidé de manière horizontale, lequel s'étend de préférence sur toute la longueur du dispositif de plateau d'appui (50) dans une fente (60) du dispositif de plateau d'appui (50) et qui peut être déplacé avec le préhenseur (62) dans la direction de la double flèche (11a) vers l'avant et vers l'arrière et dans lequel le préhenseur (62) présente une mâchoire de préhension (64) pouvant être fermée dirigée dans la direction de l'élément de stockage temporaire (2) et que le préhenseur (62) est disposé de manière à pouvoir être décalé sous le niveau du dispositif de plateau d'appui (50).

18. Dispositif selon la revendication 17,
**caractérisé en ce que**
la mâchoire de préhension (64) est formée par une plaque de préhenseur supérieure (65) et une plaque de préhenseur inférieure (66), **en ce que** les plaques de préhenseur (65, 66) sont entraînées de manière à pouvoir être déplacées en va-et-vient indépendamment l'une de l'autre et reposent au niveau d'un composant de montage (67), dans lequel le composant de montage (67) se trouve en relation d'entraînement solidaire avec le moyen d'entraînement (63).

19. Dispositif selon la revendication 18,
**caractérisé en ce que** la plaque de préhenseur supérieure (65) est reliée à une unité piston-cylindre (68) reposant au niveau de la plaque de montage (67), et **en ce que** la plaque de préhenseur inférieure (66) est reliée à une unité piston-cylindre (69) qui s'appuie également sur la plaque de montage (67), et **en ce qu'**en outre une unité piston-cylindre (70) est disposée sur la plaque de montage (67), qui peut décaler en va-et-vient la totalité du préhenseur (62).
